# NEUE EUROPÄISCHE PATENTSCHRIFT

(11) **EP 2 823 557 B2**
(45) Veröffentlichungstag und Bekanntmachung des Hinweises auf die Entscheidung über den Einspruch: **28.08.2019**
(45) Hinweis auf die Patenterteilung: 10.08.2016
(21) Anmeldenummer: 13709408.2
(22) Anmeldetag: 11.03.2013
(51) Int. Cl.: H02P 27/14, H02J 3/36, H02M 7/483, H02P 1/52, H02J 3/42, F01D 19/00, F03B 13/06

(54) **ELEKTRISCHE EINHEIT FÜR EIN PUMPSPEICHERKRAFTWERK**
ELECTRIC UNIT FOR A PUMPED-STORAGE POWER PLANT
UNITÉ ÉLECTRIQUE POUR CENTRALE DE POMPAGE

(30) Priorität: 09.03.2012 EP 12158786
(43) Veröffentlichungstag der Anmeldung: 14.01.2015
(73) Patentinhaber: ABB Schweiz AG, 5400 Baden (CH)
(72) Erfinder: WINKLER, Friedrich, CH-4600 Olten (CH); TRAXLER-SAMEK, Georg, CH-5705 Hallwil (CH); LINDER, Stefan, CH-4800 Zofingen (CH)
(74) Vertreter: Zimmermann & Partner Patentanwälte mbB
(86) Internationale Anmeldenummer: PCT/EP2013/054857
(87) Internationale Veröffentlichungsnummer: WO 2013/132098

(56) Entgegenhaltungen:
- WO-A1-2012/093942
- DE-A1- 19 845 903
- DE-A1-102004 005 191
- HAPPOLDT H K ET AL: "The Present State of Pumped Storage in Europe", IEEE TRANSACTIONS ON POWER APPARATUS AND SYSTEMS, IEEE INC. NEW YORK, US, Bd. 82, Nr. 68, 1. Oktober 1963 (1963-10-01), Seiten 618-631, XP011159285, ISSN: 0018-9510, DOI: 10.1109/TPAS.1963.291376
- R.J. KERKMAN ET AL: "An inqury into adjustable speed operation of a pumped hydro plant: Part 1 - Machine design and performance", IEEE TRANSACTIONS ON POWER APPARATUS AND SYSTEMS, vol. PAS-99, no. 5, September 1980 (1980-09), - October 1980 (1980-10), pages 1828-1836, XP055359951,
- PROF. DR.-ING. DIRK WESTERMANN: "Perspektiven der HGU-Technik - Overlaynetz (380 kV)", WORKSHOP,,UBERTRAGUNGSTECHNIK'' IM KONGRESS ZUM SOZIAL-UND NATURVERTRÄGLICHEN UMBAU DER STROMNETZE, 2010, pages 1-16, XP055359954,
- JON ARE SUUL ET AL: "Wind Power Integration in Isolated Grids enabled by Variable Speed Pumped Storage Hydropower Plant", MEMBER IEEE , TORE UNDELAND, FELLOW IEEE , 2008 IEEE INTERNATIONAL CONFERENCE ON SUSTAINABLE ENERGY TECHNOLOGIES, 2008, pages 399-404, XP031442202,

## Beschreibung

### TECHNISCHED GEBIET

Die Erfindung betrifft ein Pumpspeicherkraftwerk, insbesondere eine elektrische Einheit hierfür umfassend einen Frequenzumrichter und eine rotierende elektrische Synchronmaschine, wobei die Maschine in einer Kaverne vorgesehen ist.

### STAND DER TECHNIK

Regenerative Energiequellen, wie beispielsweise Wind- und Solarenergie, liefern einen stetig zunehmenden Anteil am Elektrizitätsbedarf. Diese Energiequellen weisen dabei unstetige Betriebszeiten auf. Somit kann eine direkte und dauerhafte Versorgung von Verbrauchern mit Elektrizität aus diesen Energiequellen nicht gewährleistet werden. Hierzu müssen Energiespeicher verwendet werden, welche schnelle Wechsel zwischen Elektrizitätsüberschuss und Elektrizitätsdefizit erlauben und deren Leistung und Energieflussrichtung rasch und kontinuierlich verändert werden können.

Als Energiespeicher stehen hierbei unterschiedliche Systeme zur Verfügung, welche sich jeweils für bestimmte Energiemengen und Anwendungsfälle besonders eignen. Für kleine Energiemengen bis etwa 20 MWh werden, je nach Anwendung, vorzugsweise kinetische Speicher (z.B. Schwungräder), elektrochemische Speicher (Batterien, Redox-Flusszellen), oder elektromagnetische Speicher (Kondensatoren, Superkondensatoren, supraleitende Spulen) verwendet. Für mittlere Energiemengen bis einige 100 MWh sind prinzipiell thermodynamische Speicher (Druckluftspeicher, elektrothermische Speicher) besonders gut geeignet. Für große Energiemengen typischerweise über 100 MWh und meist über 1 GWh werden Pumpspeicher eingesetzt.

Pumpspeicher oder Pumpspeicherkraftwerke sind auf Grund der großen speicherbaren Energiemenge besonders interessant. Dabei wird mit überschüssiger Elektrizität Wasser von einem ersten natürlichen oder künstlich hierfür angelegtem Speicherbecken in ein zweites, höher gelegenes Speicherbecken gepumpt. Die elektrische Energie wird dabei in potenzielle Energie umgewandelt. Zur Rückgewinnung von Elektrizität wird Wasser vom höher gelegenen Speicherbecken über eine Turbine zurück ins niedrigere Speicherbecken geleitet. Für dieses System ist eine Minimierung der Verluste bei den Umwandlungsprozessen besonders wichtig.

Moderne Pumpspeicher weisen drehzahlvariable Antriebe auf. Durch eine Entkoppelung der Drehzahl der Maschinen von einer Netzfrequenz können Pump- und Turbinendrehgeschwindigkeiten so eingestellt werden, dass diese nahe am optimalen Wirkungsgrades betrieben werden. Zusätzlich erlaubt es die Variation der Drehzahl im Pumpbetrieb, die Leistungsaufnahme frei einzustellen. Insbesondere können Systeme mit variabler Drehzahl schnell aus dem Stillstand mit dem Netz verbunden oder synchronisiert werden.

Pumpspeicher gemäss dem Stand der Technik weisen doppelt gespeiste Asynchronmaschinen und leistungselektronische Frequenzumformer auf, womit eine Drehzahlregelung einer Pumpe und einer Turbine möglich ist. Dabei ist ein Stator der doppelt gespeisten Asynchronmaschine direkt mit dem Stromnetz mit Netzfrequenz verbunden. Ein Rotor der doppelt gespeisten Asynchronmaschine ist via einem Frequenzumformer mit dem Netz verbunden und kann somit eine variable Frequenz aufweisen. Damit wird zum Einen eine Pumpleistung geregelt und zum Anderen kann bei Bedarf der Wirkungsgrad der Anlage erhöht werden.

Bei Pumpspeichern ist häufig vorgesehen, dass die Maschinenanlagen wie beispielsweise Turbinen, Pumpen, Motor-Generatoren und Transformatoren in einer beispielsweise in einen Fels eingebrachten Kaverne, einen Hohlraum oder in einen geschlossenen Raum unterhalb des zweiten Speicherbeckens untergebracht sind. Eine andere Form des Pumpspeichers sieht Pumpe, Turbine und Motor-Generator am unteren Ende eines Schachts vor, wobei weitere Kraftwerkskomponenten beispielsweise oberirdisch in einem Gebäude oder ebenfalls im Schacht vorgesehen sind.

Diese Kraftwerksunterbringung ist eine Folge des Umstandes, dass die Turbinen zur Vermeidung von Kavitation ausreichend unterhalb des unteren Speicherbeckens zu liegen kommen müssen. Dies ist aus Platz- und Geometriegründen meist nur möglich, indem ein Maschinenraum oder Krafthaus zur Aufnahme der Maschinenanlagen in den Untergrund gebaut wird. Weiterhin schützt eine unterirdische Bauweise vor Umwelteinflüssen wie beispielweise Lawinenabgängen. Darüber hinaus wird aus Umwelt- oder Landschaftsschutzgründen ebenfalls häufig eine unterirdische Bauweise verwendet.

Ein wesentlicher Nachteil dieser Anordnung mit doppelt gespeister Asynchronmaschine liegt darin, dass die Bestandteile des Systems zur Erzeugung der variablen Drehzahl beispielsweise wie Erregertransformator, Frequenzumformer, Polwendeschalter und Starter-Kurzschliesser in direkter Umgebung der Maschine angeordnet sein müssen. Diese Bestandteile haben einen hohen Raumbedarf, wodurch ein Krafthaus zur Unterbringung wesentlich vergrössert wird. Insbesondere bei unterirdischer Bauweise beispielsweise in einer Kaverne verursacht die Errichtung des Krafthauses sehr hohe Kosten.

In der Anordnung mit doppelt gespeister Asynchronmaschine gemäss dem Stand der Technik befindet sich ein Blocktransformator ebenfalls nahe an der Maschine. Auf Grund der hohen Maschinenströme ist es nicht möglich lange Verbindungsleitungen zu verwenden, da diese zu einem hohen Blindleistungsbedarf bei gleichzeitigen Wirkleistungsverlusten führt. Darüber hinaus besteht die Gefahr von Pendelungen zwischen Maschine und Transformator. Der Blocktransformator benötigt dabei ebenfalls viel Raum und muss wegen der Explosionsgefahr in einem speziell geschützten Teil der Kaverne aufgebaut werden. Häufig wird hierfür eine Nebenkaverne verwendet, welche nur den Blocktransformator aufnimmt. Dies führt zur weiteren Erhöhung der Kosten für eine solche Kaverne.

Davon ausgehend liegt der vorliegenden Erfindung die Aufgabenstellung zugrunde, Errichtung und Instandhaltung eines Pumpspeicherkraftwerks zu vereinfachen und die damit verbundenen Kosten zu reduzieren. Aus der deutschen Offenlegungsschriff DE 102004005191 A1 ist ein Pumpspeicherkraftwerk mit den Merkmalen des Oberbegriffs des Anspruchs 1 bekannt geworden.

### BESCHREIBUNG DER ERFINDUNG

Diese Aufgabe wird durch eine elektrische Einheit für ein Pumpspeicherkraftwerk gemäss Anspruch 1 gelöst. Weitere vorteilhafte Ausgestaltungen ergeben sich aus den abhängigen Ansprüchen, wobei die Rückbezüge der Ansprüche keine weiteren sinnvollen Anspruchskombinationen ausschliessen sollen.

Die Erfindung sieht dabei eine elektrische Einheit für ein Pumpspeicherkraftwerk vor, wobei diese mit einem Stromnetz verbindbar ist. Die elektrische Einheit umfasst dabei einen geschlossenen Maschinenraum, bevorzugt eine Kaverne oder Felskaverne, einen Frequenzumrichter und eine rotierende elektrische Synchronmaschine, welche in Abhängigkeit einer Betriebsart der Maschine als Motor oder Generator dient. Die Maschine ist mit einer Wasserturbine und einer Wasserpumpe oder einer reversiblen Pumpturbine beispielsweise mechanisch verbindbar und im Maschinenraum unterhalb eines Speicherbeckens vorgesehen. Der Frequenzumrichter weist zwei durch einen DC oder Gleichstromverbindung elektrisch miteinander verbundene Elemente auf, wobei in Abhängigkeit des Betriebs der Maschine jeweils ein Element als ein Gleichrichter und ein Element als ein Wechselrichter verwendbar ist und wobei das maschinenseitige Element oder Inverter Unit INU innerhalb des Maschinenraumes und das netzseitige Element oder Active Rectifier Unit ARU ausserhalb des Maschinenraumes vorgesehen ist.

In einer vorteilhaften Ausgestaltung der Erfindung umfasst die elektrische Einheit einen Blocktransformator, welcher außerhalb des Maschinenraumes vorgesehen ist.

In einer weiteren vorteilhaften Ausführungsform umfasst die elektrische Einheit zusätzlich einen Filter, welcher außerhalb des Maschinenraumes vorgesehen ist.

In einer weiteren vorteilhaften Ausführungsform sind die Elemente des Umrichters jeweils für einen generatorisch induktiven, generatorisch kapazitiven, motorisch induktiven oder motorisch kapazitiven Betrieb einsetzbar oder anders ausgedrückt, dass die beiden Elemente des Umrichters in allen vier Quadranten einer Vier-Quadranten-Darstellung von Wirkleistung und Blindleistung betrieben werden können.

In einer besonders vorteilhaften Ausführungsform ist vorgesehen, dass der Umrichter als selbstkommutierter Konverter mit einem beispielsweise konzentrierten oder verteilten Spannungszwischenkreis oder mit einem Stromzwischenkreis ausgebildet ist.

In einer weiteren vorteilhaften Ausführungsform ist der Umrichter als fremdkommutierter Konverter ausgebildet.

Eine weitere Ausführungsform sieht vor, dass die elektrische Verbindung zwischen den Elementen des Umrichters weniger als 0.2% Wirkleistungsverluste aufweist.

Entsprechend vereinfacht die Erfindung das Errichten eines Pumpspeichers insbesondere bei einer unterirdischen Bauweise beispielsweise in einer Felskaverne. Das örtliche Trennen der elektrischen Einheit spart dabei nicht nur Kosten bei dem Ausheben der Kaverne sondern auch bei der Instandhaltung beispielsweise durch einen vereinfachten Explosionsschutz des Blocktransformators ausserhalb der Kaverne.

### KURZBESCHREIBUNG DER ZEICHNUNGEN

Weitere Merkmale, Einzelheiten und Vorteile der Erfindung ergeben sich aus dem Wortlaut der Ansprüche sowie aus der Beschreibung von Ausführungsbeispielen anhand der Figur.

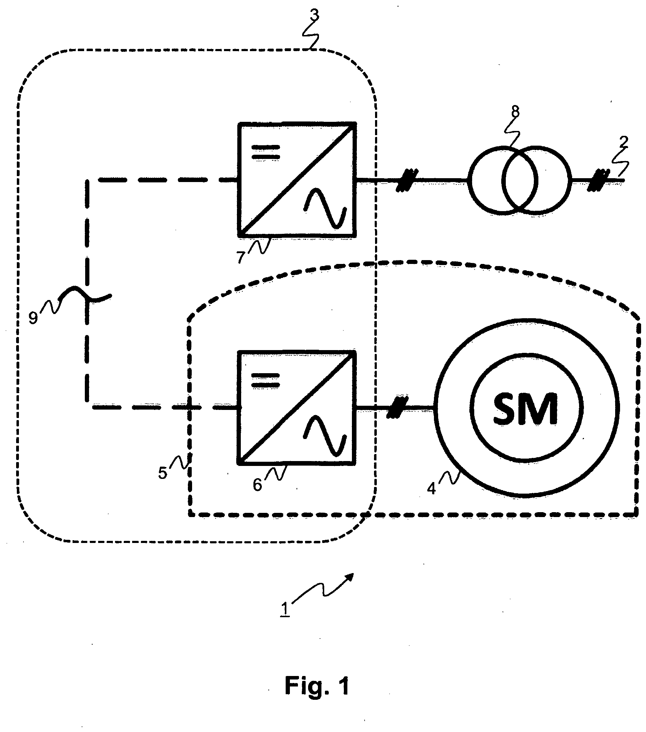

Die Erfindung wird in weiteren Einzelheiten anhand des nachfolgenden Textes mit Bezug auf bevorzugte Ausführungsbeispiele anhand der Figur näher erläutert. Es zeigt
- Fig.1: eine schematische Darstellung einer elektrischen Einheit mit einem Frequenzumrichter, einer elektrischen Synchronmaschine und einem Blocktransformator.

Die Bezugszeichen und deren Bedeutung sind zusammengefasst in der Bezugszeichenliste. Im allgemeinen bezeichnen dieselben Bezugszeichen dieselben Teile.

### DETAILIERTE BESCHREIBUNG BEISPIELHAFTER AUSFÜHRUNGSFORMEN

Fig.1 zeigt in einer schematischen Darstellung eine elektrische Einheit 1 verbunden mit einem Stromnetz 2. Die elektrische Einheit 1 umfasst dabei einen Frequenzumrichter 3 und eine rotierende elektrische Synchronmaschine 4. Die Maschine 4 ist dabei beispielsweise auf Grund von örtlichen Gegebenheiten oder zum Schutz in einer Kaverne 5 untergebracht.

Der Frequenzumrichter 3 umfasst zumindest zwei Elemente 6, 7, welche je nach Betriebsart der Maschine beispielsweise im Motor- oder Generatorbetrieb als Wechselrichter oder Gleichrichter einsetzbar sind. Dabei ist das maschinenseitige Element 6 innerhalb der Kaverne 5 und das netzseitige Element 7 außerhalb der Kaverne 5 vorgesehen. Dies ist insbesondere dadurch möglich, da modernste Frequenzumrichter wie beispielsweise Modulare Multilevel Converter M2LC es ermöglichen die Elemente 6, 7 voneinander zu trennen und diese nicht in unmittelbarer Nähe voneinander aufzustellen. Eine Drehzahlregelung wird dadurch ermöglicht, dass die Maschine 4 einen Stator aufweist, der mittels einem Drehstrom mit einstellbarer Frequenz gespeist wird.

In der Kaverne 5 oder beispielsweise einem Schacht wird die elektrische Maschine und das maschinenseitige Element 6 oder Inverter Unit INU des Frequenzumrichters 3 aufgenommen. Die INU dient als Wechselrichter im Pumpmodus und als Gleichrichter im Turbinenmodus. Das netzseitige Element 7 oder Active Rectifier Unit ARU des Frequenzumrichters 3, welche als Gleichrichter im Pumpmodus und als Wechselrichter im Turbinenmodus betrieben wird, wird außerhalb der Kaverne 5 in einer Distanz von wenigen zehn bis mehreren tausend Metern von der INU aufgestellt. ARU und INU sind dabei durch eine DC Verbindung, ausgebildet als Spannungs- oder Stromzwischenkreis 9 miteinander verbunden.

Die Entkoppelung von ARU und INU wird möglich, da in dem Zwischenkreis 9 zeitlich nur langsame Strom- und Spannungsänderungen auftreten. Deshalb bestehen keine besonders hohen Anforderungen an die Leitung bezüglich geringer Induktivität und Kapazität, um Resonanzphänomene zu unterdrücken. Der Zwischenkreis 9 muss jedoch so ausgelegt werden, dass die Wirkleistungsverluste durch den Widerstandsbelag gering bleiben. Da im Zwischenkreis 9 im Wesentlichen eine Spannung der gleichen Grössenordnung herrscht wie an Klemmen der Maschine 4, treten generell hohe Nennströme auf Dies limitiert die wirtschaftlich realisierbare Länge der DC Verbindung auf höchstens einige Kilometer.

Die Frequenzumformung wird mittels einer Kombination eines Gleichrichters und einen Wechselrichters erzeugt, welche über einen konzentrierten oder verteilten Spannungszwischenkreis oder Stromzwischenkreis miteinander verbunden sind. Der Zwischenkreis 9 und/oder die Elemente 6,7 des Frequenzumrichters weisen dabei weiterhin Einheiten zur Energiespeicherung auf beispielsweise Kondensatoren bei einem Spannungszwischenkreis und Induktivitäten bei einem Stromzwischenkreis.

Die Erfindung ermöglicht es weiterhin einen Blocktransformator 8 außerhalb der Kaverne 5 zu verwenden. Bei einem System gemäß dem Stand der Technik wird der Blocktransformator 8 innerhalb der Kaverne 5 aufgestellt, wobei auf Grund der Explosionsgefahr von Transformatorenölen ein aufwendiger Explosionsschutz vorgesehen sein muss und in Folge dessen beispielsweise der Blocktransformator 8 in einer Nebenkaverne aufgestellt wird. Gemäß der Erfindung wird der Blocktransformator 8 außerhalb der Kaverne 5 aufgestellt. Dies ist möglich, da der Blocktransformator 8 sich bei der erfindungsgemässen Anordnung nur nahe der ARU befinden muss, nicht aber nahe zur Maschine 4. Die Vorteile sind eine deutlich verkleinerte Kaverne 5, keine separaten oder grössere Zugangsstollen zur Einbringung des Blocktransformators 8, und geringere Kosten des Explosionsschutzes. Weiterhin können Filter zur Glättung verwendet werden, wobei diese meist viel Raum benötigen und eine Unterbringung ausserhalb der Kaverne daher ebenfalls vorteilhaft ist.

In einer Ausführungsform umfasst der Frequenzumrichter einen Zwischenkreis 9 insbesondere einen Spannungszwischenkreis oder einen Stromzwischenkreis. Der Zwischenkreis 9 ist zwischen den Elementen 6, 7 vorgesehen und kann dabei konzentriert oder verteilt ausgebildet sein.

Der Betrieb der Maschine mit einer frei wählbaren Drehzahl weist erhebliche Vorteile auf. Insbesondere kann bei der Ausführungsform mit einem Frequenzumrichter und einer Synchronmaschine eine etablierte, zuverlässige und wartungsarme Generatortechnologie verwendet werden. Weiterhin besteht die Möglichkeit, eine Pumpe und eine Turbine unabhängig voneinander in deren optimalen Drehzahlbereich zu betreiben. Durch die Verwendung der Synchronmaschine 4 sind insbesondere auch bei hohen Leistungen hohe Drehzahlen beispielsweise für hohe Gefälle realisierbar. Darüber hinaus reicht der betrieblich zugängliche Drehzahlbereich kontinuierlich von Null bis zur maximalen Drehzahl und ist nur beschränkt durch die betrieblichen Grenzen der Pumpe und der Turbine. Die Pumpe und die Turbine können prinzipiell in einer Einheit beispielsweise einer Pumpenturbine vereint werden. Insbesondere besteht die Möglichkeit einer Nachrüstung von älteren Anlagen auf variablen Frequenzbetrieb, ohne Austausch des bestehenden Generators. Ein weiterer Vorteil ist eine sehr rasche Netzkoppelung und die Möglichkeit vom Netz 2 verlangte positive und negative Blindleistung in der ARU 7 des Frequenzumrichters 3 zu erzeugen. Damit kann der Generator ausschließlich mit Wirkleistung betrieben werden, wodurch dieser eine kompaktere Bauart aufweist. Weiterhin kann durch die Verwendung des Frequenzumrichters 3 schnell beispielsweise vom Pump- in Turbinenbetrieb umgeschaltet werden.

### BEZUGSZEICHENLISTE

- 1: Elektrische Einheit
- 2: Stromnetz
- 3: Frequenzumrichter
- 4: Elektrische Synchronmaschine
- 5: Kaverne
- 6: maschinenseitige elektrisch Element
- 7: netzseitige elektrisch Element
- 8: Blocktransformator
- 9: Zwischenkreis

## Patentansprüche

1. Elektrische Einheit (1) für ein Pumpspeicherkraftwerk, verbindbar mit einem Stromnetz (2) und umfassend einen Maschinenraum (5) mit einer rotierenden elektrischen Synchronmaschine (4) und umfassend einen Frequenzumrichter (3), wobei die Maschine (4) mit einer Wasserturbine und/oder einer Wasserpumpe verbindbar ist,
wobei der Umrichter (3) ein maschinenseitiges elektrisches Element (6) und ein netzseitiges elektrisches Element (7) aufweist, welche Elemente (6, 7) miteinander verbunden sind, und wobei in Abhängigkeit des Betriebs der Maschine (4), der einen Motorbetrieb und einen Generatorbetrieb aufweist, jeweils ein Element (6, 7) als ein Gleichrichter und ein Element als ein Wechselrichter betreibbar ist,
**dadurch gekennzeichnet, dass** das maschinenseitige Element (6) innerhalb des Maschinenraums (5) vorgesehen und mit einem Stator der Maschine (4) verbunden ist, und dass das netzseitige Element (7) ausserhalb des Maschinenraums (5) vorgesehen und über eine DC Verbindung (9) mit dem maschinenseitigen Element (6) verbunden ist.

2. Elektrische Einheit nach Anspruch 1, **dadurch gekennzeichnet, dass** der Maschinenraum (5) eine Kaverne ist.

3. Elektrische Einheit nach Anspruch 1 oder 2, **dadurch gekennzeichnet, dass** die Einheit einen Blocktransformator (8) und/oder einen Filter umfasst, welche außerhalb des Maschinenraumes (5) vorgesehen sind.

4. Elektrische Einheit nach einem der Ansprüche 1 bis 3, **dadurch gekennzeichnet, dass** die Elemente (6, 7) des Umrichters (3) jeweils für einen generatorisch induktiven, generatorisch kapazitiven, motorisch induktiven oder motorisch kapazitiven Betrieb einsetzbar sind.

5. Elektrische Einheit nach einem der Ansprüche 1 oder 4, **dadurch gekennzeichnet, dass** der Umrichter (3) als selbstkommutierter Konverter mit einem Spannungszwischenkreis (9) oder mit einem Stromzwischenkreis (9) ausgebildet ist.

6. Elektrische Einheit nach einem der Ansprüche 1 oder 4, **dadurch gekennzeichnet, dass** der Frequenzumrichter (3) als fremdkommutierter Konverter ausgebildet ist.

7. Elektrische Einheit nach einem der Ansprüche 1 oder 6, **dadurch gekennzeichnet, dass** die elektrische Verbindung (9) zwischen den Elementen (6, 7) des Umrichters (3) weniger als 0.2% Wirkleistungsverluste aufweist.

## Claims

1. Electric unit (1) for a pumped-storage power plant, connectable to an electric grid (2) and comprising a machine hall (5) having a rotating electric synchronous machine (4), and comprising a frequency converter (3), wherein the machine (4) is connectable to a water turbine and/or a water pump,
wherein the converter (3) has a machine-side electrical element (6) and a grid-side electrical element (7), which elements (6, 7) are connected to one another, and wherein in each case one element (6, 7) is operable as a rectifier and one element is operable as an inverter, depending on the operation of the machine (4), the operation comprising a motor operation and a generator operation,
**characterized in that**
the machine-side element (6) is provided within the machine hall (5) and is connected to a stator of the machine (4), and **in that** the grid-side element (7) is provided outside the machine hall (5) and is connected to the machine-side element (6) via a DC link (9).

2. Electric unit according to Claim 1, **characterized in that** the machine hall (5) is a cavern.

3. Electric unit according to Claim 1 or 2, **characterized in that** the unit comprises a generator transformer (8) and/or a filter, which are provided outside the machine hall (5).

4. Electric unit according to one of Claims 1 to 3, **characterized in that** the elements (6, 7) of the converter (3) are each usable for inductive generator operation, capacitive generator operation, inductive motor operation or capacitive motor operation.

5. Electric unit according to either of Claims 1 and 4, **characterized in that** the converter (3) is in the form of a self-commutated converter comprising a voltage DC link (9) or comprising a current DC link (9).

6. Electric unit according to either of Claims 1 and 4, **characterized in that** the frequency converter (3) is in the form of an externally commutated converter.

7. Electric unit according to either of Claims 1 and 6, **characterized in that** the electrical connection (9) between the elements (6, 7) of the converter (3) has less than 0.2% active power losses.

## Revendications

1. Unité électrique (1) pour une centrale hydroélectrique à accumulation par pompage, pouvant être reliée à un réseau électrique (2) et comprenant une salle des machines (5) avec une machine synchrone (4) électrique rotative et comprenant un convertisseur de fréquence (3), la machine (4) pouvant être reliée à une turbine à eau et/ou une pompe à eau,
le convertisseur (3) possédant un élément électrique côté machine (6) et un élément électrique côté réseau (7), lesdits éléments (6, 7) étant reliés l'un à l'autre, et
suivant le régime de la machine (4), le régime comprenant un régime de fonctionnement du moteur et un régime de fonctionnement du générateur, un élément (6, 7) peut respectivement fonctionner en tant que redresseur et un élément en tant qu'onduleur, **caractérisée en ce que**
l'élément côté machine (6) se trouve à l'intérieur de la salle des machines (5) et il est relié à un stator de la machine (4), et **en ce que** l'élément côté réseau (7) se trouve à l'extérieur de la salle des machines (5) et il est relié à l'élément côté machine (6) par le biais d'une liaison à courant continu (9).

2. Unité électrique selon la revendication 1, **caractérisée en ce que** la salle des machines (5) est une caverne.

3. Unité électrique selon la revendication 1 ou 2, **caractérisée en ce que** l'unité comprend un transformateur principal (8) et/ou un filtre qui se trouvent à l'extérieur de la salle des machines (5).

4. Unité électrique selon l'une des revendications 1 à 3, **caractérisée en ce que** les éléments (6, 7) du convertisseur (3) peuvent respectivement être utilisés pour un régime inductif générateur, capacitif générateur, inductif moteur ou capacitif moteur.

5. Unité électrique selon l'une des revendications 1 à 4, **caractérisée en ce que** le convertisseur (3) est réalisé sous la forme d'un convertisseur à commutation propre pourvu d'un circuit intermédiaire de tension (9) ou pourvu d'un circuit intermédiaire de courant (9).

6. Unité électrique selon l'une des revendications 1 à 4, **caractérisée en ce que** le convertisseur de fréquence (3) est réalisé sous la forme d'un convertisseur à commutation externe.

7. Unité électrique selon l'une des revendications 1 à 6, **caractérisée en ce que** la liaison électrique (9) entre les éléments (6, 7) du convertisseur (3) présente moins de 0,2 % de pertes de puissance active.
